# EUROPÄISCHE PATENTSCHRIFT

(11) **EP 0 491 073 B1**
(45) Veröffentlichungstag und Bekanntmachung des Hinweises auf die Patenterteilung: **22.02.1995**
(21) Anmeldenummer: 90124634.8
(22) Anmeldetag: 18.12.1990
(51) Int. Cl.: G06F 11/10

(54) **Verfahren und Schaltungsanordnung zur Datensicherung in Speichereinheiten**
Method and apparatus for protection of data in memory units
Méthode et procédé de protection de données dans des unités de mémoire

(43) Veröffentlichungstag der Anmeldung: 24.06.1992
(73) Patentinhaber: Siemens Nixdorf Informationssysteme Aktiengesellschaft, 33102 Paderborn (DE)
(72) Erfinder: Kock, Ernst, Dr.rer.nat., W-8011 Kirchseeon (DE); Reichert, Ulrich, Dipl.-Ing., W-8000 München 40 (DE)
(74) Vertreter: Fuchs, Franz-Josef, Dr.-Ing.

(56) Entgegenhaltungen:
- EP-A- 0 294 678
- US-A- 4 791 642
- IBM TECHNICAL DISCLOSURE BULLETIN Bd. 24, Nr. 2, Juli 1981, Seiten 986 - 987;F. D. LAWLOR: 'EFFICIENT MASS STORAGE PARITY RECOVERY MECHANISM '

## Beschreibung

Die Erfindung betrifft ein verfahren und eine Schaltungsanordnung zur Datensicherung in Speichereinheiten gemäß dem Oberbegriff des Patentanspruches 1 bzw. des Patentanspruches 7.

Bei der Speicherung von Daten in Speichereinheiten, beispielsweise mit wahlfreiem Zugriff (RAM), sind die einzelnen Speichereinträge häufig in mehrere Abschnitte unterteilt, die gleichzeitig mit einer Adresse ansteuerbar sind, und von denen bei Schreiboperationen jeweils wenigstens ein Abschnitt des Speichereintrags ausgewählt wird, um die darin enthaltenen Daten gegebenenfalls durch neue zu ersetzen. Zur Sicherung des Datenteils weisen die Speichereinträge jeweils einen gemeinsamen Prüfteil auf, dessen Sicherungscode entsprechend einem vorgegebenen Fehlererkennungs- und/oder -korrekturgrad gewählt wird.

Aus "IBM Technical Disclosure Bulletin", Vol. 24, No. 2, July 1981, pages 986 bis 987, ist ein verfahren zur Bildung eines neuen gemeinsamen Prüfsummenabschnitts bei Änderung eines Datenabschnitts bekannt. Dabei wird eine Kopie der zu ändernden Daten mit den neuen Daten für diesen Abschnitt zu einer Änderungsmaske verknüpft, aus der zusammen mit dem alten Prüfsummenabschnitt der neue abgeleitet wird.

Dieses einfache Prinzip, den neuen Prüfteil aus dem alten unter Berücksichtigung der im Datenteil erfolgten Änderungen zu gewinnen, setzt voraus, daß die Daten im alten Datenteil fehlerfrei sind. Damit eine Verfälschung der Änderungsmaske durch fehlerhafte Daten nicht auftreten kann, ist es üblich, daß der gesamte Speichereintrag gelesen und anschließend eine Fehlerprüfung durchgeführt wird, sowie im Fehlerfall die fehlerhaften Daten zunächst korrigiert werden, bevor der neue Prüfteil abgeleitet wird.

Die zeitlich seriell ablaufenden und insbesondere bei jeder Schreiboperation durchzuführenden Schritte zur Bildung des neuen Prüfteils können bei der Vielzahl der Operationen zu erheblichen Verzögerungen im Steuerungsablauf führen und in einem Datenverarbeitungssystem eine Reduzierung der Leistung zur Folge haben.

Daher liegt der vorliegenden Erfindung die Aufgabe zugrunde, ausgehend von einem Verfahren der eingangs genannten Art, ein Verfahren und eine Schaltungsanordnung zu schaffen, die einen Zeitgewinn bei der Ausführung von Schreiboperationen gewährleisten.

Diese Aufgabe wird erfindungsgemäß durch die kennzeichnenden Merkmale des Patentanspruches 1 bezüglich des Verfahrens gelöst.

Zu zeitlichen Einsparungen bei der Ausführung einer Schreiboperation kommt es dadurch, daß die Fehlerprüfung für den von der Schreiboperation betroffenen Speichereintrag bereits zeitlich parallel zur Ableitung des neuen Prüfteils erfolgt. Dies wirkt sich zeitlich besonders dann vorteilhaft aus, wenn kein Fehler oder ein nicht korrigierbarer Fehler festgestellt wird, da eine Fehlerkorrektur unterbleiben kann. Liegt hingegen ein korrigierbarer Fehler vor, so wird eine durchgeführte Fehlerkorrektur nur dann wirksam, wenn die durch die Schreiboperation zu ändernden Abschnitte des Speichereintrags von dem festgestellten Fehler betroffen sind.

Ein Fehler, der lediglich in den durch die Schreiboperation nicht zu ändernden Abschnitten ermittelt wird, bleibt erhalten, so daß beim nächstfolgenden Auslesen des geänderten Speichereintrags der Fehler wiederum erkannt und gegebenenfalls korrigiert werden kann. Hingegen würde ein in den durch die Schreiboperation zu ändernden Abschnitten auftretender korrigierbarer Fehler bei Nichtkorrektur zu einem verfälschten Speichereintrag führen, der bei einem nächstfolgenden Lesevorgang nicht kompensiert werden könnte.

Gemäß einer Weiterbildung der Erfindung wird die Korrektur des gelesenen Speichereintrags auch für den Fall nicht wirksam, daß der Fehler lediglich in den durch die Schreiboperation zu ändernden Abschnitten vorliegt. Der neue Prüfteil wird dann anhand des aus den nicht geänderten und den geänderten Datenabschnitten bestehenden neuen Datenteils gebildet, was schneller durchführbar ist, als der Umweg über die Korrektur.

Eine andere Weiterbildung der Erfindung besteht darin, daß der Prüfteil eines jeden Speichereintrags aus einem gemeinsamen, von ausgewählten Datenbitstellen abgeleiteten Sicherungszeichen und aus den einzelnen Abschnitten individuell zugeordneten, von Datenbitstellen des jeweiligen Abschnitts abgeleiteten Sicherungszeichen aufgebaut ist. Die bei jeder Schreiboperation durchzuführende Fehlerprüfung erfolgt lediglich anhand der individuellen Sicherungszeichen, was zu einem zusätzlichen Zeitgewinn bei der Feststellung von in den einzelnen Abschnitten des Speichereintrags auftretenden Fehlern führt. Betrifft der auftretende korrigierbare Fehler lediglich durch die Schreiboperation zu ändernde Abschnitte, so wird gemäß einer weiteren Ausgestaltung der Erfindung der Beitrag des gemeinsamen Sicherungszeichens zum neuen Prüfteil anhand der entsprechend des zugrundegelegten Sicherungscodes ausgewählten Datenbitstellen des durch die Schreiboperation geänderten neuen Datenteils neu gebildet.

Gemäß weiterer Ausgestaltungen der Erfindung werden bei Vorliegen eines nicht korrigierbaren Fehlers die den einzelnen Abschnitten individuell zugeordneten Sicherungszeichen des gelesenen Speichereintrags invertiert übernommen, so daß der neue Prüfteil mit den auf diese Weise modifizierten individuellen Sicherungszeichen das Erkennen eines nicht korrigierbaren Fehlers beim nächstfolgenden Lesevorgang für den geänderten Speichereintrag gewährleistet.

Die Merkmale zur Lösung der Aufgabe hinsichtlich der Schaltungsanordnung sind im kennzeichnenden Teil des Patentanspruches 7 enthalten. Weiterbildungen der erfindungsgemäßen Schaltungsanordnung sind in den darauffolgenden Unteransprüchen angegeben.

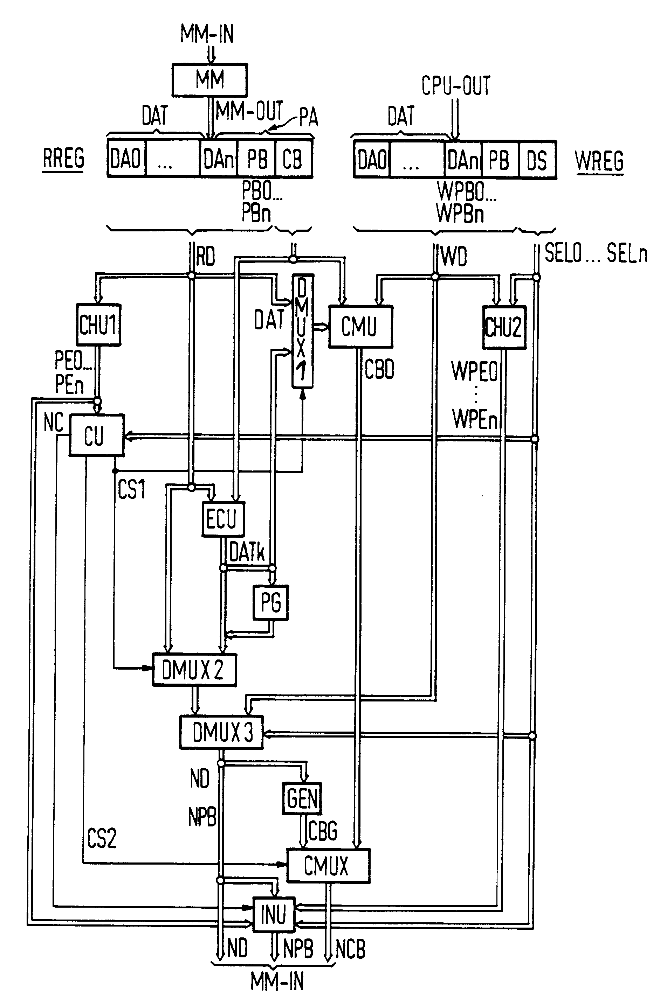

Einzelheiten der Erfindung werden anhand eines in der Zeichnung dargestellten Ausführungsbeispiels näher erläutert.

Das gezeigte Blockschaltbild enthält eine Speichereinrichtung MM mit einer Vielzahl von Speichereinträgen, die jeweils über einen Dateneingangspfad MM-IN eingeschrieben oder mittels eines Datenausgangspfades MM-OUT ausgelesen werden können.

Bei einer Schreiboperation wird der adressierte Speichereintrag aus der Speichereinrichtung MM ausgelesen und in ein Leseregister RREG eingetragen. Parallel dazu erfolgt die Bereitstellung der Schreibdaten, die beispielsweise von einer Verarbeitungseinheit über den Datenpfad CPU-OUT an ein Schreibregister WREG übergeben werden. Der gelesene Speichereintrag besteht aus mehreren Abschnitten DAO...DAn, die gemeinsam den Datenteil DAT bilden, sowie aus einem den Datenteil DAT sichernden Prüfteil PA. Der zugrundegelegte Sicherungscode ist dabei so gewählt, daß die Sicherungszeichen nicht nur abschnittsweise, beispielsweise immer über ein Byte, sondern auch über Datenbitstellen mehrerer Abschnitte, beispielsweise ein Wort oder Doppelwort, gebildet werden. Da wahlweise ansteuerbare Abschnitte eines Speichereintrags durch eine Schreiboperation änderbar sind, besteht die Notwendigkeit, außer den Datenteil auch den zugehörigen gemeinsamen Prüfteil zu aktualisieren.

Im Schreibregister WREG sind die neuen Daten für die durch die Schreiboperation änderbaren Datenabschnitte DAO...DAn an entsprechenden Speicherplätzen gespeichert. Der gesamte Datenteil DAT ist durch einen aus individuell zugeordneten, nur von den Datenbitstellen des jeweiligen Abschnitts abgeleiteten Sicherungszeichen WPBO...WPBn bestehenden Prüfteil PB ergänzt. Von der Verarbeitungseinheit werden zusätzlich abschnittsindividuelle Auswahlinformationen SELO...SELn mitgeliefert, anhand derer jeweils feststellbar ist, ob ein Datenabschnitt durch die Schreiboperation zu ändern ist. Diese Informationen sind im Abschnitt DS des Schreibregisters WREG zusammengefaßt gespeichert.

Der gemeinsame Prüfteil PA jedes gelesenen Speichereintrags ist gemäß der Weiterbildung der Erfindung in ein gemeinsames Sicherungszeichen CB, beispielsweise bestehend aus Korrekturbitstellen, die von entsprechend einem zugrundegelegten Sicherungscode (Error-Correcting Code) ausgewählten Datenbitstellen abgeleitet sind, und in individuelle Sicherungszeichen PB, bestehend aus den einzelnen Abschnitten DAO...DAn individuell zugeordneten, nur von den Datenbitstellen des jeweiligen Abschnitts abgeleiteten Sicherungszeichen PBO...PBn, gegliedert. Lediglich der Beitrag des gemeinsamen Sicherungszeichens CB zu dem aufgrund der Schreiboperation zu aktualisierenden Prüfteil wird daher in der Verknüpfungseinrichtung CMU in herkömmlicher Weise abgeleitet.

Dazu werden die im Leseregister RREG und im Schreibregister WREG gespeicherten Daten des jeweiligen Datenteils DAT ausgelesen, die Daten des gelesenen Speichereintrags von einer Auswahlschalteinheit DMUX1 durchgeschaltet und die bereitgestellten Daten in einer ersten, aus EXOR-Gliedern bestehenden Stufe bitstellenweise zu einer Änderungsmaske miteinander verknüpft. Anhand der Änderungsmaske findet dann in einer nachgeschalteten, ebenfalls aus EXOR-Gliedern aufgebauten Verknüpfungsstufe eine Überprüfung statt, ob die Anzahl der jeweils zu einer Korrekturbitstelle des gemeinsamen Sicherungszeichens CB beitragenden geänderten Datenbitstellen geradzahlig oder ungeradzahlig ist. Mit der zweiten Verknüpfungsstufe ist eine Auswahlschalteinrichtung verbunden, deren Auswahlschalter abhängig von der jeweils ermittelten Anzahl die aus dem Leseregister RREG jeweils gelesene Korrekturbitstelle direkt oder invertiert durchschalten, so daß an den Ausgängen der Einheit CMU das abgeleitete gemeinsame Sicherungszeichen CBD zur Rückspeicherung in die Speichereinheit MM vorliegt.

Zeitlich parallel zur Ableitung des gemeinsamen Sicherungszeichens CBD werden die Lesedaten RD einschließlich der den einzelnen Abschnitten DAO...DAn des Datenteils DAT individuell zugeordneten Sicherungszeichen PBO...PBn bereitgestellt und auf das Vorliegen von Fehlern in einer Fehlerprüfeinrichtung CHU1 untersucht. Anhand des nur von den Datenbitstellen des jeweiligen Abschnitts abgeleiteten individuellen Sicherungsbits läßt sich ein Fehler in dem zugehörigen Abschnitt sehr schnell erkennen. Beispielsweise kann eine individuelle Sicherung in der bekannten Paritätssicherung bestehen, bei der die aus den gelesenen Datenbitstellen abgeleiteten Paritäten mit den gespeicherten Paritäten verglichen werden. Liegt ein Fehler in einem Abschnitt vor, so wird dies jeweils anhand abschnittsbezogener Paritätsfehlersignale PEO...PEn von der Prüfeinrichtung CHU1 einer nachgeschalteten Steuerumschalteinrichtung CU gemeldet.

Durch Verknüpfung der Fehlersignale PEO...PEn werden von der Steuerumschalteinrichtung CU Fehlersignale CS1, CS2, NC erzeugt, von denen die Signale CS1, CS2 einen insgesamt korrigierbaren Fehler sowie das Signal NC einen nicht korrigierbaren Fehler im Datenteil DAT des gelesenen Speichereintrags anzeigen. Ob die einzelnen Abschnitte DAO...DAn des Datenteils DAT von dem festgestellten korrigierbaren Fehler betroffen sind, kann anhand der abschnittsindividuellen Auswahlinformationen SELO...SELn, die die durch die Schreiboperation zu ändernden Abschnitte kennzeichnen, ermittelt werden.

Dabei liegt das Fehlersignal CS1 an einem Ausgang der Einrichtung CU für den Fall an, daß der korrigierbare Fehler durch die Schreiboperation zu ändernde Abschnitte umfaßt, der Fehler hingegen nicht lediglich in den zu ändernden Abschnitten vorliegt. Das Fehlersignal CS1 bildet das Steuersignal für eine erste Auswahlschalteinheit DMUX1, von der anstelle der bereitgestellten Daten DAT des gelesenen Speichereintrags korrigierte Daten DATK an die Einrichtung CMU zur erneuten Ableitung des gemeinsamen Sicherungszeichens CBD durchschaltbar sind.

Die korrigierten Daten DATK resultieren aus der Korrektur der fehlerhaften Datenbitstellen des gelesenen Seichereintrags, dessen Daten RD zusammen mit dem zugehörigen gemeinsamen Sicherungszeichen CB einer Korrektureinrichtung ECU zur Verfügung gestellt werden. Der Teil der mit den Lesedaten RD bereitgestellten, individuell zugeordneten Sicherungszeichen PBO...PBn, der fehlerhafte Abschnitte des gelesenen Datenteils betrifft, wird in einer Einrichtung PG anhand der Datenbitstellen der jeweils korrigierten Abschnitte neu generiert. Somit bilden die korrigierten Lesedaten RDK zusammen mit den nicht korrigierten, gegebenenfalls fehlerfreien Lesedaten RD die Dateneingangspfade einer zweiten Auswahlschalteinheit DMUX2, von der abhängig vom Fehlersignal CS1 einer der beiden Dateneingangspfade zum Ausgangspfad durchgeschaltet wird.

Für die Rückspeicherung des aktualisierten Speichereintrags in die Speichereinrichtung MM über den Dateneingangspfad MM-IN ist die Bereitstellung des neuen Datenteils ND einschließlich der individuell zugeordneten Sicherungszeichen NPB des neuen Prüfteils erforderlich. Zu diesem Zweck ist eine dritte Auswahlschalteinheit DMUX3 vorgesehen, von der die Schreibdaten WD samt der den einzelnen Abschnitten individuell zugeordneten Sicherungszeichen WPBO...WPBn mit den von der Schalteinheit DMUX2 durchgeschalteten Daten einschließlich der zugehörigen, individuell zugeordneten Sicherungszeichen vermischt werden. Die Einheit DMUX3 besteht beispielsweise aus einzelnen Auswahlschaltern, für die die Auswahlinformationen SELO...SELn als Steuersignale zur abschnittsweisen Durchschaltung der gelesenen bzw. korrigierten Daten oder der Schreibdaten wirken.

Der somit gebildete neue Datenteil ND wird einer Einrichtung GEN zur Erzeugung des gemeinsamen Sicherungszeichens CBG aus den entsprechend dem vorgegebenen Sicherungscode ausgewählten Datenbitstellen des neuen Datenteils ND zugeführt. Für den Fall, daß das Fehlersignal CS2 an einem Ausgang der Steuerumschalteinrichtung CU anliegt, das besagt, daß der korrigierbare Fehler nur in den durch die Schreiboperation zu ändernden Abschnitten vorliegt, wird die für den gesamten gelesenen Speichereintrag notwendige und von der Einrichtung ECU durchgeführte Fehlerkorrektur nicht wirksam, da das zum neuen Prüfteil beitragende gemeinsame Sicherungszeichen CBG anhand des aus Lesedaten RD und Schreibdaten WD zusammengesetzten neuen Datenteils gebildet wird. Daher ist eine weitere Auswahlschalteinheit CMUX angeordnet, die zur wahlweisen, abhängig vom Signal CS2 erfolgenden Durchschaltung des abgeleiteten gemeinsamen Sicherungszeichens CBD oder des neu gebildeten gemeinsamen Sicherungszeichens CBG mit den Einrichtungen CMU und GEN gekoppelt ist. Für den über den Dateneingangspfad MM-IN in die Speichereinrichtung MM zurückzuschreibenden aktualisierten Speichereintrag sind folglich der neue Datenteil ND und das neue gemeinsame Sicherungszeichen NCB bestimmt.

Empfänger der von der Schalteinheit DMUX3 bereitgestellten, individuell zugeordneten Sicherungszeichen NPB ist eine Einrichtung INU, die eine Verknüpfungslogik und eine Auswahlschalteinrichtung umfaßt. Jedes individuell zugeordnete Sicherungszeichen wird direkt oder durch ein NICHT-Glied invertiert von einem zugehörigen Auswahlschalter der Schalteinrichtung als Beitrag zum neuen Prüfteil weitergeleitet. Die wahlweise Durchschaltung für die Übernahme eines individuell zugeordneten Sicherungszeichens erfolgt für jeden Abschnitt des Datenteils in Abhängigkeit von einem Steuersignal, das von der Verknüpfungslogik geliefert wird. Dazu wird das an einem Ausgang der Steuerumschalteinrichtung CU anliegende, einen nicht korrigierbaren Fehler kennzeichnende Signal NC mit dem von den Datenbitstellen des jeweiligen Abschnitts abgeleiteten Paritätsfehlersignal, z.B. PEO, und der entsprechenden Auswahlinformation, z.B. SELO, verschaltet. In gleicher Weise wie die Lesedaten RD lassen sich auch die Schreibdaten WO in einer entsprechenden Fehlerprüfeinrichtung CHU2 auf Fehler überprüfen und Steuersignale anhand der abgeleiteten Paritätsfehlersignale WPEO...WPEn in Verbindung mit den Auswahlinformationen SELO...SELn erzeugen.

Damit sichergestellt ist, daß bei einem nächstfolgenden Lesevorgang für den in die Speichereinrichtung MM zurückzuschreibenden Speichereintrag der nicht korrigierbare Fehler bei der durchzuführenden Fehlerprüfung erneut festgestellt wird, werden vor dem Rückschreiben von den individuell zugeordneten Sicherungszeichen NPB diejenigen invertiert übernommen, die den durch die Schreiboperation zu ändernden Abschnitten zugeordnet sind. Zusätzlich müssen auch die individuell zugeordneten Sicherungszeichen invertiert zum neuen Prüfteil beitragen, die vom festgestellten Fehler nicht betroffen sind und deren jeweilige Abschnitte durch die Schreiboperation nicht geändert werden.

Eine im Ergebnis gleichwertige Alternative zur Sicherstellung nicht verfälschter Daten kann darin bestehen, daß eine Fehlermeldung zur Unterdrückung des Rückschreibvorgangs erzeugt wird, oder daß die Daten der von dem nicht korrigierbaren Fehler betroffenen Abschnitte als ungültig gekennzeichnet werden.

Für den Fall, daß bei der Schreiboperation kein Fehler festgestellt wird, werden die Lesedaten RD mittels der Auswahlschalteinheit DMUX2 bereitgestellt und durch die Auswahlschalteinheit DMUX3 mit den Schreibdaten WD zum neuen Datenteil ND vermengt. Das gemeinsame, in herkömmlicher Weise in der Einrichtung CMU parallel zum Datenpfad abgeleitete Sicherungszeichen CBD und die von der Einrichtung INU gelieferten, nicht invertierten individuell zugeordneten Sicherungszeichen NPB bilden dann den zugehörigen neuen Prüfteil.

Dasselbe gilt, wenn ein korrigierbarer Fehler außerhalb der zu ändernden Datenabschnitte festgestellt wird. Dieser bleibt daher solange erhalten, bis eine Schreiboperation den fehlerbehafteten Datenabschnitt betrifft.

Ist dagegen der zu ändernde gelesene Datenabschnitt fehlerbehaftet und der Fehler korrigierbar, bestehen zwei Steuermöglichkeiten:
a) Der Fehler wird korrigiert und daher der Korrekturpfad auf den Ausgang der Auswahlschalteinheit DMUX1 geschaltet sowie das gemeinsame Sicherungszeichen CBD von der Einheit CMU erneut erzeugt, bevor der Schreibvorgang für den Speicher MM ausgelöst wird.
b) Für den Fall, daß nur der zu ändernde Datenabschnitt fehlerbehaftet ist, wird gemäß der Weiterbildung der Erfindung auf die Wirksamschaltung der Korrektur verzichtet und stattdessen aus den gewünschten Daten am Ausgang der Auswahlschalteinheit DMUX3 das neue gemeinsame Sicherungszeichen CBG durch die Einrichtung GEN vollkommen neu gebildet und über die Auswahlschalteinheit CMUX bereitgestellt.

## Patentansprüche

1. Verfahren zur Datensicherung in Speichereinheiten (MM), bei denen die einzelnen Speichereinträge aus einem in mehrere Abschnitte (DAO...DAn) unterteilten Datenteil (DAT) und einem den Datenteil sichernden Prüfteil (PA) bestehen und bei denen wahlweise ansteuerbare Abschnitte der Speichereinträge durch Schreiboperationen änderbar sind, wobei der zum neuen Datenteil gehörige neue Prüfteil jeweils aus dem alten Prüfteil (CB) unter Berücksichtigung der sich durch die Schreiboperation ergebenden Änderungen im Datenteil (DAT) abgeleitet wird, **dadurch gekennzeichnet,** daß der von einer Schreiboperation jeweils betroffene Speichereintrag zeitlich parallel zur Ableitung des neuen Prüfteiles (z.B. CBD) in herkömmlicher Weise gelesen und auf das Vorliegen von Fehlern überprüft wird, daß aber bei Vorliegen eines korrigierbaren Fehlers (CS1) eine Fehlerkorrektur des gelesenen Speichereintrags nur wirksam und eine erneute Ableitung des neuen Prüfteiles nur durchgeführt wird, wenn die durch die Schreiboperation zu ändernden Abschnitte eines Speichereintrags von dem festgestellten Fehler (CS1) betroffen sind.

2. Verfahren nach Anspruch 1, **dadurch gekennzeichnet,** daß der neue Prüfteil (z.B. CBG) anhand des neuen Datenteils (NO) gebildet wird, wenn der Fehler (CS2) lediglich in den durch die Schreiboperation zu ändernden Abschnitten vorliegt.

3. Verfahren nach Anspruch 1 oder 2, **dadurch gekennzeichnet,** daß der Prüfteil (PA) eines jeden Speichereintrags aus einem gemeinsamen, von entsprechend einem zugrundegelegten Sicherungscode ausgewählten Datenbitstellen abgeleiteten Sicherungszeichen (CB) und aus den einzelnen Abschnitten (DAO...DAn) individuell zugeordneten, nur von den Datenbitstellen des jeweiligen Abschnitts abgeleiteten Sicherungszeichen (PB) besteht, und daß bei jeder Schreiboperation die Fehlerprüfung nur anhand der individuellen Sicherungszeichen (PB) durchgeführt wird.

4. Verfahren nach den Ansprüchen 2 und 3, **dadurch gekennzeichnet,** daß der Beitrag des gemeinsamen Sicherungszeichens (CBG) zum neuen Prüfteil anhand der entsprechend dem zugrundegelegten Sicherungscode ausgewählten Datenbitstellen des neuen Datenteiles (ND) gebildet wird.

5. Verfahren nach Anspruch 4, **dadurch gekennzeichnet,** daß bei Vorliegen eines nicht korrigierbaren Fehlers (NC) von den individuell zugeordneten Sicherungszeichen (NPB) die invertiert in den neuen Prüfteil übernommen werden, die den durch die Schreiboperation zu ändernden Abschnitten zugeordnet sind, und die von dem Fehler (NC) nicht betroffen und deren jeweilige Abschnitte durch die Schreiboperation nicht zu ändern sind.

6. Schaltungsanordnung zur Durchführung des Verfahrens nach Anspruch 1 mit einer Speichereinheit (MM) zur Speicherung der jeweils aus einem in mehrere Abschnitte (DAO...DAn) unterteilten Datenteil (DAT) und einem den Datenteil sichernden Prüfteil (PA) bestehenden Speichereinträge und mit einer Verknüpfungseinrichtung (CMU) zur Ableitung des neuen Prüfteiles (z.B. CBD) aus dem alten Prüfteil (CB) unter Berücksichtigung der sich durch die Schreiboperation ergebenden Änderungen im Datenteil (DAT), **gekennzeichnet durch** eine Einrichtung zum Erzeugen von Auswahlsignalen (SELO... SELn) zur Auswahl der individuellen Datenabschnitte die unter Benützung der Auswahlinformation (DS) des neuen Speichereintrages durch die aktuellen Schreiboperationen zu ändern sind, und durch eine parallel zur Verknüpfungseinrichtung (CMU) angeordnete Fehlerprüfeinrichtung (CHU1) zur Überprüfung der von der Schreiboperation jeweils betroffenen Daten (RD) des gelesenen Speichereintrags und zur Bereitstellung von abschnittsbezogenen Signalen (PEO...PEn) für das Vorliegen von Fehlern in den einzelnen Abschnitten (DAO...DAn), und durch eine mit der Fehlerprüfeinrichtung (CHU1) verbundene Steuerumschalteinrichtung (CU), von der durch Verknüpfung der bereitgestellten, abschnittsbezogenen Signale (PEO...PEn) mit abschnittsindividuellen Auswahlsignalen (SELO...SELn) zur Kennzeichnung der durch die Schreiboperation zu ändernden Abschnitte Fehlersignale (CS1,CS2,NC) ableitbar sind, von denen Auswahlschalteinheiten (DMUX1,DMUX2, CMUX) zur Bereitstellung des zum neuen Datenteil (ND) gehörigen neuen Prüfteils steuerbar sind.

7. Schaltungsanordnung nach Anspruch 6, **dadurch gekennzeichnet,** daß eine Korrektureinrichtung (ECU) vorgesehen ist, der die Daten (RD) des gelesenen Speichereintrags zuführbar sind, und daß die korrigierten Daten (DATK) von einer ersten Auswahlschalteinheit (DMUX1) abhängig von einem ersten Fehlersignal (CS1) zur Kennzeichnung eines korrigierbaren Fehlers an die Verknüpfungseinrichtung (CMU) durchschaltbar sind.

8. Schaltungsanordnung nach Anspruch 6, **dadurch gekennzeichnet,** daß der aus Lesedaten (RD) und Schreibdaten (WD) gebildete neue Datenteil (ND) einer Einrichtung (GEN) zur Bildung des neuen Prüfteils (z.B. CBG) aus den Datenbitstellen des neuen Datenteils zuführbar ist, und daß mit der Einrichtung (GEN) eine weitere Auswahlschalteinheit (CMUX) verbunden ist, von der abhängig von einem zweiten Fehlersignal (CS2) zur Kennzeichnung eines korrigierbaren Fehlers der gebildete neue Prüfteil (z.B. CBG) zur Rückspeicherung in die Speichereinrichtung (MM) durchschaltbar ist.

9. Schaltungsanordnung nach einem der Ansprüche 6 bis 8, **dadurch gekennzeichnet,** daß der Prüfteil (PA) eines jeden Speichereintrags ein gemeinsames Sicherungszeichen (CB) und individuell zugeordnete Sicherungszeichen (PB) aufweist, und daß die Verknüpfungseinrichtung (CMU) lediglich zur Ableitung des Beitrags des gemeinsamen Sicherungszeichens (CBD) zum neuen Prüfteil vorgesehen ist.

10. Schaltungsanordnung nach Anspruch 9, **dadurch gekennzeichnet,** daß von der Einrichtung (GEN) zur Erzeugung des neuen Prüfteils lediglich das gemeinsame Sicherungszeichen (CBG) ableitbar ist.

11. Schaltungsanordnung nach Anspruch 9 oder 10, **gekennzeichnet**durch eine Einrichtung (INU) zur Invertierung der den Abschnitten des neuen Datenteils (ND) individuell zugeordneten Sicherungszeichen (NPB) und zur abschnittsweisen Durchschaltung der invertierten Sicherungszeichen, abhängig von Steuersignalen, die aus der Verknüpfung eines Fehlersignals (NC) zur Anzeige eines nicht korrigierbaren Fehlers mit den abschnittsbezogenen Signalen (PEO...PEn) und den abschnittsindividuellen Auswahlsignalen (SELO...SELn) ableitbar sind.

## Claims

1. Method for protecting data in memory units (MM), in which the individual memory entries comprise a data part (DAT) divided into a plurality of sections (DA0...DAn) and a check part (PA) that protects the data part, and in which randomly accessible sections of the memory entries can be changed by write operations, the new check part associated with the new data part being derived in each case from the old check part (CB) with reference to the changes in the data part (DAT) arising from the write operation, characterized in that the memory entry affected in each case by a write operation is read in the customary manner concurrently with the derivation of the new check part (for example CBD) and is checked for the presence of errors, but that if a correctable error (CS1) is present, an error correction of the memory entry read only takes effect and a renewed derivation of the new check part is only performed if the sections of a memory entry to be changed by the write operation are affected by the error (CS1) detected.

2. Method according to Claim 1, characterized in that the new check part (for example CBG) is formed on the basis of the new data part (ND) if the error (CS2) is only present in the sections to be changed by the write operation.

3. Method according to Claim 1 or 2, characterized in that the check part (PA) of each memory entry comprises a shared check character (CB), derived from data bit positions selected in accordance with an underlying error correcting code, and check characters (PB) individually assigned to the individual sections (DA0...DAn) and derived only from the data bit positions of the respective section, and in that during each write operation the error checking is performed only with reference to the individual check characters (PB).

4. Method according to Claims 2 and 3, characterized in that the contribution of the shared check character (CBG) to the new check part is formed on the basis of the data bit positions of the new data part (ND) that were selected in accordance with the underlying error correcting code.

5. Method according to Claim 4, characterized in that if an error (NC) that cannot be corrected is present, of the individually assigned check characters (NPB), those ones which are assigned to the sections to be changed by the write operation, and which are not affected by the error (NC), and the respective sections of which are not to be changed by the write operation, are transferred inverted into the new check part.

6. Circuit arrangement for carrying out the method according to Claim 1, having a memory unit (MM) for storing the memory entries comprising in each case the data part (DAT) divided into a plurality of sections (DA0...DAn) and a check part (PA) that protects the data part, and having a gating means (CMU) for deriving the new check part (for example CBD) from the old check part (CB) with reference to the changes in the data part (DAT) arising from the write operation, characterized by a means for generating selection signals (SEL0...SELn) for selecting the individual data sections to be changed by the current write operations using the selection information (DS) of the new memory entry, and by an error checking means (CHU1) arranged parallel to the gating means (CMU) for checking the data (RD) of the memory entry read which are affected by the write operation in each case, and for providing section-specific signals (PE0...PEn) for the presence of errors in the individual sections (DA0...DAn), and by a control switchover means (CU) connected to the error checking means (CHU1), from which control switchover means error signals (CS1, CS2, NC) can be derived by gating the section-specific signals (PE0...PEn) provided with section-specific selection signals (SEL0...SELn) for indicating the sections to be changed by the write operation, by means of which error signals selection switch units (DMUX1, DMUX2, CMUX) can be controlled for providing the new check part associated with the new data part (ND).

7. Circuit arrangement according to Claim 6, characterized in that a correcting means (ECU) is provided to which the data (RD) of the memory entry read can be supplied, and in that the corrected data (DATK) can be connected through to the gating means (CMU) by a first selection switch unit (DMUX1) depending on a first error signal (CS1) for indicating a correctable error.

8. Circuit arrangement according to Claim 6, characterized in that the new data part (ND) formed from read data (RD) and write data (WD) can be supplied to a means (GEN) for forming the new check part (for example CBG) from the data bit positions of the new data part, and in that connected to the means (GEN) is a further selection switch unit (CMUX), by means of which the new check part (for example CBG) formed can be connected through for storing again in the memory means (MM) depending on a second error signal (CS2) for indicating a correctable error.

9. Circuit arrangement according to one of Claims 6 to 8, characterized in that the check part (PA) of each memory entry has a shared check character (CB) and individually assigned check characters (PB), and in that the gating means (CMU) is provided solely for deriving the contribution of the shared check character (CBD) to the new check part.

10. Circuit arrangement according to Claim 9, characterized in that only the shared check character (CBG) can be derived by the means (GEN) for generating the new check part.

11. Circuit arrangement according to Claim 9 or 10, characterized by a means (INU) for inverting the check characters (NPB) individually assigned to the sections of the new data part (ND) and for connecting through the inverted check characters section-by-section depending on control signals which can be derived from the gating of an error signal (NC) for indicating an error that cannot be corrected with the section-specific signals (PE0...PEn) and the section-specific selection signals (SEL0...SELn).

## Revendications

1. Procédé pour protéger des données dans des unités de mémoire (MM), dans lesquelles les différentes introductions en mémoire sont constituées d'une partie de données (DAT), subdivisée en plusieurs sections (DA0...DAn), et d'une partie de contrôle (PA) qui protège la partie de données, et dans lesquelles des sections, commandables au choix, des introductions en mémoire peuvent être modifiées au moyen d'opérations d'enregistrement, et la nouvelle partie de contrôle, qui est associée à la nouvelle partie de données, étant dérivée respectivement de l'ancienne partie de contrôle (CB) en tenant compte des modifications résultant de l'opération d'enregistrement, dans la partie de données (DAT), caractérisé par le fait que l'on lit de façon usuelle dans le temps en parallèle pour obtenir la nouelle partie de contrôle (par exemple CBD) l'introduction en mémoire, qui est concernée respectivement par une opération d'enregistrement, et on la contrôle pour déterminer s'il existe des erreurs, mais que, en présence d'une erreur (CS1) pouvant être corrigée, on n'active une correction d'erreur de l'introduction en mémoire lue et on n'effectue une nouvelle génération de la nouvelle partie de contrôle que lorsque les sections, qui doivent être modifiées par l'opération d'enregistrement, d'une entrée en mémoire sont concernées par l'erreur détectée (CS1).

2. Procédé suivant la revendication 1, caractérisé par le fait que l'on forme la nouvelle partie de contrôle (par exemple CBG) sur la base de la nouvelle partie de données (ND), lorsque l'erreur (CS2) est présente uniquement dans les sections devant être modifiées au moyen de l'opération d'enregistrement.

3. Procédé suivant la revendication 1 ou 2, caractérisé par le fait que la partie de contrôle (PA) de chaque introduction en mémoire est constituée par un signal de protection commun (CB), qui est dérivé d'emplacements de bits de données, sélectionnés en fonction d'un code de protection pris comme base, et par des signaux de protection (PB), associés individuellement aux différentes sections (DA0... DAn) et dérivés uniquement des emplacements des bits de données de la section respective, et
que pour chaque opération d'enregistrement, on n'effectue le contrôle d'erreur que sur la base des signaux individuels de protection (PB).

4. Procédé suivant l'une des revendications 2 et 3, caractérisé par le fait que l'on forme la contribution du signal de protection commun (CBG) à la nouvelle partie de contrôle sur la base des emplacements de bits de données, qui sont sélectionnés en fonction du code de protection pris pour base, de la nouvelle partie de données (ND).

5. Procédé suivant la revendication 4, caractérisé par le fait qu'en la présence d'une erreur (NC) qui ne peut pas être corrigée, on transfère en étant inversés, dans la nouvelle partie de contrôle, ceux des signaux de protection (NPB) associés individuellement aux différentes sections, qui sont associés à des sections devant être modifiées par l'opération d'enregistrement, qui ne sont pas concernés par l'erreur (NC) et dont les sections respectives ne doivent pas être modifiées par l'opération d'enregistrement.

6. Montage pour la mise en oeuvre du procédé suivant la revendication 1, comportant une unité de mémoire (MM) servant à mémoriser les introductions en mémoire, qui sont constituées respectivement d'une partie de données (DAT) subdivisée en plusieurs sections (DA0...DAn) et d'une partie de contrôle (PA), qui protège la partie de données, et comportant un dispositif combinatoire (CMU) pour l'obtention de la nouvelle partie de contrôle (par exemple CBD) à partir de l'ancienne partie de contrôle (CB) en tenant compte des modifications, résultant de l'opération d'enregistrement dans la partie de données (DAT), caractérisé par un dispositif pour produire des signaux de sélection (SEL0...SELn) des sections individuelles de données, qui doivent être modifiées en utilisant l'information de sélection (DS) de la nouvelle introduction en mémoire par les opérations actuelles d'enregistrement, par un dispositif de contrôle d'erreurs (CHU1), qui est disposé en parallèle au dispositif combinatoire (CMU) et sert à contrôler les données (RD), qui sont concernées respectivement par l'opération d'enregistrement, de l'introduction en mémoire lue et à préparer des signaux (PE0...PEn), rapportés aux sections, pour la présence d'erreurs dans les différentes sections (DA0...DAn), et par un dispositif (CU) de commutation de commande, qui est relié au dispositif de contrôle d'erreurs (CHU1) et qui permet d'obtenir, par combinaison des signaux préparés (PE0...PEn) rapportés aux sections à des signaux de sélection (SEL0...SELn) prévus individuellement pour les sections et servant à caractériser les sections devant être modifiées par l'opération d'enregistrement, des signaux d'erreurs (CS1,CS2,NC) par lesquels peuvent être commandées des unités de commutation sélective (DMUX1, DMUX2, CMUX) pour la préparation de la nouvelle partie de contrôle associée à la nouvelle partie de données (ND).

7. Montage suivant la revendication 6, caractérisé par le fait qu'il est prévu un dispositif de correction (ECU), auquel les données (RD) de l'introduction en mémoire lue peuvent être envoyées et les données corrigées (DATK) peuvent être transmises par une première unité de commutation sélective (DMUX1) au dispositif combinatoire (CMU) en fonction d'un premier signal d'erreur (CS1) servant à caractériser une erreur pouvant être corrigée.

8. Montage suivant la revendication 6, caractérisé par le fait que la nouvelle partie de données (ND), qui est formée de données de lecture (RD) et de données d'enregistrement (WD), peut être envoyée à un dispositif (GN) servant à former la nouvelle partie de contrôle (par exemple CBG) à partir des emplacements de bits de données de la nouvelle partie de données, et au dispositif (GEN) est reliée une autre unité de commutation sélective (CMUX), par laquelle la nouvelle partie de contrôle formée (par exemple CBG) peut être transmise en fonction d'un second signal d'erreur (CS2) destiné à caractériser une erreur pouvant être corrigée, pour une mémorisation en retour dans le dispositif de mémoire (MM).

9. Montage suivant l'une des revendications 6 à 8, caractérisé par le fait que la partie de contrôle (PA) de chaque introduction en mémoire comporte un signal commun de protection (CB) et un signal de protection associé individuellement (PB), et le dispositif combinatoire (CMU) est prévu uniquement pour obtenir la contribution du signal commun de protection (CBD) à la nouvelle partie de contrôle.

10. Montage suivant la revendication 9, caractérisé par le fait que seul le signal commun de protection (CBG) peut être obtenu par le dispositif (GEN) pour produire de la nouvelle partie de contrôle.

11. Montage suivant la revendication 9 ou 10, caractérisé par un dispositif (INU) destiné à inverser les signaux de protection (NPB), qui sont associés individuellement aux sections de la nouvelle partie de données (ND), et destiné à transmettre, section par section, les signaux de protection inversés, en fonction de signaux de commande, qui peuvent être dérivés de la combinaison d'un signal d'erreur (NC) servant à indiquer une erreur ne pouvant être corrigée, avec les signaux (PE0...PEn) rapportés aux sections, et avec les signaux de sélection (SEL0...SELn), qui sont prévus individuellement pour les sections.
